# EUROPÄISCHE PATENTSCHRIFT

(11) **EP 3 452 833 B1**
(45) Veröffentlichungstag und Bekanntmachung des Hinweises auf die Patenterteilung: **15.09.2021**
(21) Anmeldenummer: 17748429.2
(22) Anmeldetag: 21.07.2017
(51) Int. Cl.: G01N 35/00, G01N 35/10, B01L 3/02, B01L 3/00, G01D 5/241, G01F 23/26

(54) **VERFAHREN ZUR POSITIONSBESTIMMUNG EINES ROBOTERARMS IN EINEM FLÜSSIGKEITSHANDHABUNGSSYSTEM SOWIE EIN ENTSPRECHENDES FLÜSSIGKEITSHANDHABUNGSSYSTEM**
METHOD FOR DETERMINING THE POSITION OF A ROBOTIC ARM IN A LIQUID HANDLING SYSTEM, AND A CORRESPONDING LIQUID HANDLING SYSTEM
PROCÉDÉ POUR DÉTERMINER LA POSITION D'UN BRAS ROBOTISÉ DANS UN SYSTÈME DE MANIPULATION DE LIQUIDE ET SYSTÈME DE MANIPULATION DE LIQUIDE CORRESPONDANT

(30) Priorität: 22.07.2016 CH 9502016; 10.02.2017 CH 1592017; 19.04.2017 CH 5232017
(43) Veröffentlichungstag der Anmeldung: 13.03.2019
(73) Patentinhaber: Tecan Trading AG, 8708 Männedorf (CH)
(72) Erfinder: OTT, Philipp, 8496 Steg im Tösstal (CH); SCHÖNI, Markus, 8606 Nänikon (CH); STRUCHEN, Thomas, 8625 Gossau (CH); BÜELER, Raffael, 8645 Jona (CH); CORS, Nicolas, 8640 Rapperswil (CH); MEIER, Theo, 8634 Hombrechtikon (CH); KESSLER, Daniel, 8708 Männedorf (CH)
(74) Vertreter: Troesch Scheidegger Werner AG
(86) Internationale Anmeldenummer: PCT/EP2017/068497
(87) Internationale Veröffentlichungsnummer: WO 2018/015545

(56) Entgegenhaltungen:
- US-A- 5 529 754
- US-A1- 2002 095 974
- US-A1- 2010 228 513
- US-A1- 2015 114 140

## Beschreibung

### VERWANDTE ANMELDUNGEN

Die vorliegende Anmeldung beansprucht die Priorität der Schweizer Patentanmeldung CH 00950/16 mit Anmeldetag 22. Juli 2016 sowie der Schweizer Patentanmeldung CH 00159/17 mit Anmeldetag 10. Februar 2017 sowie der Schweizer Patentanmeldung CH 00523/17 mit Anmeldetag 19. April 2017.

### TECHNISCHES GEBIET DER ERFINDUNG

Die vorliegende Erfindung bezieht sich auf das technische Gebiet der automatischen Flüssigkeitshandhabungssysteme (auch Liquid-Handling Arbeitsstationen genannt) bzw. Flüssigkeitsbearbeitungssysteme und betrifft Verfahren zur (Referenz-)Positionsbestimmung eines Roboterarms, insbesondere einer Pipettenspitze oder eines Greiferfingers an einem Roboterarm, in einem solchen System. Des Weiteren werden ein automatisches Flüssigkeitshandhabungssystem mit einem Roboterarm, welches ausgebildet ist, um eine genaue Positionsbestimmung des Roboterarms (bzw. einer Pipettenspitze oder eines Greiferfingers am Roboterarm) auszuführen, sowie Verwendungen des Positionsbestimmungsverfahrens angegeben.

### HINTERGRUND DER ERFINDUNG

Wenn in medizinischen, chemischen, analytischen oder pharmazeutischen Labors grosse Mengen an Proben zu untersuchen sind, werden dazu heute meist automatisierte Laborsysteme bzw. -anlagen eingesetzt, welche eine rasche und zuverlässige Verarbeitung jeder einzelnen Probe ermöglichen. Solche Laborsysteme sind oftmals als Flüssigkeitsbearbeitungssysteme auf die Handhabung von Flüssigkeitsvolumina ausgelegt, und dazu geeignet mit diesen Proben bestimmte Vorgänge auszuführen, wie beispielsweise optische Messungen, Pipettierungen, Waschen, Zentrifugieren, Inkubieren und Filtrieren. Dabei werden üblicherweise ein oder mehrere Roboter(-arme), wie z.B. Pipettierroboter(-arme) oder Logitistikroboter(-arme), für den vollautomatischen Betrieb solcher Laborsysteme eingesetzt. Diese Roboter sind insbesondere auf den Umgang mit Flüssigkeitsbehältern, wie beispielsweise Probenröhren oder Mikroplatten, in welchen sich die Flüssigkeitsproben befinden, spezialisiert. Solche Flüssigkeitsbearbeitungssysteme umfassen insbesondere Pipettierer zum Ansaugen und Abgeben von Flüssigkeiten oder Dispenser zum Abgeben von Flüssigkeiten.

Angesichts der oftmals sehr kleinen Dimensionen der Probenbehältnisse, wie z.B. der Probenröhrchen oder Kavitäten (sog. "Wells") in einer Mikroplatte, ist eine besonders genaue Positionierung z.B. der Pipettenspitze durch den Pipettierroboter erforderlich. Mechanische Toleranzen begrenzen dabei die Genauigkeit, mit welcher der Roboterarm bzw. die daran angeordnete Pipettenspitze positioniert werden kann. Daher ist es oftmals notwendig bei Inbetriebnahme des Roboters diesen zwecks Positionskalibration an eine bestimmte Referenzposition innerhalb des Flüssigkeitshandhabungssystems zu bringen. Dazu gibt es eine Reihe verschiedener bekannter Verfahren. Dies kann beispielsweise manuell erfolgen, indem der Roboterarm durch eine Person an eine bestimmte Stelle geführt wird. Diese Stelle kann z.B. mit einer entsprechenden Markierung versehen sein, sodass sie mittels einer Kamera erkannt werden kann. Somit kann der Roboterarm automatisch mit Hilfe der Kamera an die Referenzposition gesteuert werden. Alternativ kann ein (Zeilen-)Lasersystem, welches ohne Kamera funktioniert, zur genauen optischen Positionsbestimmung eingesetzt werden. Weiter ist es möglich, die Referenzposition automatisch zu "ertasten", indem der Roboter basierend auf Kraftmessungen registriert, dass er z.B. einen Anschlag bei der Referenzposition berührt.

Aufgrund von Bewegungstoleranzen kann es auch während des Betriebs des Flüssigkeitshandhabungssystems notwendig sein periodisch eine Positionskalibration vorzunehmen.

Es besteht daher in automatischen Flüssigkeitshandhabungssystemen der Bedarf nach Mitteln, welche eine einfache und folglich kostengünstige sowie zuverlässige und genaue (Referenz-)Positionsbestimmung bzw. Positionskalibration erlauben. Diese Mittel sollten es auch ermöglichen während des Betriebs des Flüssigkeitshandhabungssystems die Position periodisch genau einzustellen bzw. zu kalibrieren.

Die US 2015/0114140 A1 offenbart ein Verfahren zum Einstellen einer Position einer Ansaugeinrichtung in einer Probenverarbeitungsvorrichtung, wobei die Probenverarbeitungsvorrichtung einen Kapazitätssensor umfasst. Die Ansaugeinrichtung wird dazu über ein Positionseinstellmittel bewegt, das elektrisch leitend und an einer vorbestimmten Position angeordnet ist. Dabei wird eine Kapazität vom Kapazitätssensor erfasst. Referenzpositionsinformationen, die eine Referenzposition der Ansaugeinrichtung angibt, wird basierend auf einer Änderung der erhaltenen Kapazität ermittelt.

Die US 5,529,754 beschreibt eine Vorrichtung zur kapazitiven Bestimmung der Position einer Pipettiernadel in einem automatisierten Analysegerät. Zur Feineinstellung der Position der Pipettiernadel umfasst das Analysegerät eine Vorrichtung zum Messen der elektrischen Kapazität zwischen der Pipettiernadel und einem Referenzkörper sowie zum Bestimmen der Koordinaten einer Referenzposition der Pipettiernadel.

Die US 2010/0228513 A1 schlägt ein Verfahren zur Positionsbestimmung einer Probensonde vor, basierend auf einer Kapazität, welche zwischen der Probensonde und einem Probenbehälter gemessen wird.

Die US 2002/0095974 A1 betrifft die Ausrichtung von Sondenspitzen eines Mehrfachsondenarrays in einem Präzisionsflüssigkeitshandhabungssystems. Die Position jeder Sondenspitze wird bestimmt, indem die Sondenspitze mit Punkten an der Seitenwand einer Lokalisierungsvertiefung, welche an einer bekannten Position liegt, in Kontakt gebracht werden.

### ZUSAMMENFASSUNG DER ERFINDUNG

Es ist eine Aufgabe der vorliegenden Erfindung ein Verfahren zur (Referenz-)Positionsbestimmung eines Roboterarms in einem automatischen Flüssigkeitshandhabungssystem vorzuschlagen, welches automatisch, einfach und mit hoher Genauigkeit ausgeführt werden kann. Diese Aufgabe wird erfindungsgemäss durch das in Anspruch 1 festgelegte Verfahren gelöst.

Es ist zudem eine Aufgabe der vorliegenden Erfindung ein Flüssigkeitshandhabungssystem mit einem Roboterarm bereitzustellen, welches ausgebildet ist, um eine genaue Positionsbestimmung des Roboterarms auszuführen. Diese Aufgabe wird erfindungsgemäss durch das automatische Flüssigkeitshandhabungssystem gemäss Anspruch 11 gelöst.

Spezifische erfindungsgemässe Ausführungsvarianten werden in den abhängigen Ansprüchen angegeben.

Gemäss einem ersten Aspekt der vorliegenden Erfindung wird in Anspruch 1 ein erfindungsgemässes Verfahren zur (Referenz-)Positionsbestimmung eines Roboterarms in einem automatischen Flüssigkeitshandhabungssystem vorgeschlagen. Das Flüssigkeitshandhabungssystem umfasst eine im Wesentlichen horizontal ausgerichtete Arbeitsfläche zum Platzieren von Behältern oder Behälterträgern und mindestens ein Roboterarm mit einem Antrieb, wie beispielsweise ein Pipettierroboter mit mindestens einer Pipette zum Aufnehmen und/oder Abgeben von Flüssigkeitsproben oder ein Logistikroboter mit mindestens einem Greiferfinger zum Bewegen der Behälter oder Behälterträger, sowie eine Steuereinheit, welche mit dem Roboterarm wirkverbunden ist, wobei eine Messsonde mit einer ersten Elektrode am Roboterarm angeordnet ist, welche zusammen mit einer zweiten Elektrode, die durch mindestens einen Teil der Arbeitsfläche oder mindestens einen Teil eines Behälters oder Behälterträgers gebildet wird, einen Messkondensator bildet, welcher mit einer Messeinheit zur Messung einer Impedanz, insbesondere einer Kapazität, des Messkondensators wirkverbunden ist. Es sei an dieser Stelle bemerkt, dass die komplexwertige Impedanz des Messkondensators nebst einem kapazitiven Anteil auch einen resistiven Anteil aufweist (zumindest unter gewissen Umständen). Daher wird im Folgenden oftmals von einer Impedanzmessung und nicht nur von einer Kapazitätsmessung gesprochen. Die Arbeitsfläche oder der Behälter oder Behälterträger weist mindestens eine erste und eine zweite Aussparung oder Vertiefung auf, welche Änderungen der Impedanz, insbesondere der Kapazität, des Messkondensators bewirken, wobei die erste und zweite Aussparung oder Vertiefung dreiecks- oder trapezförmig ist, und wobei die Arbeitsfläche oder der Behälter oder Behälterträger zwei gleiche dreiecks- oder trapezförmige Aussparungen oder Vertiefungen aufweist, welche insbesondere um 180° verdreht zueinander angeordnet sind. In einer Ausführungsvariante umfasst das Verfahren weiter vor dem Schritt a) den Schritt:
- vertikales Absenken der Messsonde bis ein vorgegebener Wert der Kapazität des Messkondensators erreicht oder überschritten wird.

In einer weiteren Ausführungsvariante des Verfahrens weist die Arbeitsfläche und/oder der Behälter oder Behälterträger mindestens einen Materialübergang auf, welcher beim Bewegen der Messsonde die erste, zweite oder weitere Änderung der Impedanz, insbesondere der Kapazität, des Messkondensators bewirkt, und an welchem insbesondere eine Änderung einer Leitfähigkeit oder Dielektrizitätskonstante entlang des ersten bzw. zweiten Pfades stattfindet.

In einer weiteren Ausführungsvariante umfasst das Verfahren weiter die Schritte:
- Absenken der Messsonde in vertikaler Richtung an einer Kante, insbesondere in die erste oder zweite Aussparung oder Vertiefung;
- Detektieren einer zusätzlichen Änderung der Impedanz, insbesondere der Kapazität, des Messkondensators an einer Stelle in vertikaler Richtung;
- Festlegen einer dritten, vertikalen Referenzraumkoordinate, z.B. der z-Koordinate, für die Steuereinheit basierend auf der Stelle in vertikaler Richtung.

In einer weiteren Ausführungsvariante des Verfahrens wird beim Bewegen der Messsonde entlang des ersten bzw. zweiten Pfades eine absolute Kapazität des Messkondensators ermittelt, wobei die absolute Kapazität des Messkondensators insbesondere zeitlich periodisch und/oder in regelmässigen örtlichen Abständen ermittelt wird.

In einer weiteren Ausführungsvariante des Verfahrens basiert das Detektieren der ersten, zweiten, weiteren oder zusätzlichen Änderung der Impedanz, insbesondere der Kapazität, des Messkondensators, insbesondere der absoluten Kapazität des Messkondensators, auf einer Steilheit eines zeitlichen Verlaufs, insbesondere auf einer Zunahme der Steilheit, der gemessenen Kapazität des Messkondensators.

In einer weiteren Ausführungsvariante des Verfahrens werden die Schritte a) bis c) mehrmals durchgeführt, insbesondere um eine erhöhte Genauigkeit der ersten und/oder zweiten Referenzraumkoordinate, z.B. der x- und/oder y-Koordinate zu erreichen.

In einer weiteren Ausführungsvariante des Verfahrens umfasst das Detektieren der ersten, zweiten, weiteren oder zusätzlichen Änderung der Impedanz, insbesondere der Kapazität, des Messkondensators eine Mittelung und/oder eine Geräuschfilterung.

In einer weiteren Ausführungsvariante des Verfahrens wird die Messsonde durch eine Pipettenspitze (im Falle eines Pipettierroboters), insbesondere durch eine Wegwerfpipettenspitze ("disposable tip") oder ein Stahlkanülenspitze ("fix tip"), oder einen Greiferfinger (im Fall eines Logistikroboters) gebildet.

Gemäss einem zweiten Aspekt der vorliegenden Erfindung umfasst ein erfindungsgemässes automatisches Flüssigkeitshandhabungssystem eine im Wesentlichen horizontal ausgerichtete Arbeitsfläche zum Platzieren von Behältern oder Behälterträgern und mindestens ein Roboterarm mit einem Antrieb, wie beispielsweise ein Pipettierroboter mit mindestens einer Pipette zum Aufnehmen und/oder Abgeben von Flüssigkeitsproben oder ein Logistikroboter mit mindestens einem Greiferfinger zum Bewegen der Behälter oder Behälterträger, sowie eine Steuereinheit, welche mit dem Roboterarm wirkverbunden ist, wobei eine Messsonde mit einer ersten Elektrode am Roboterarm angeordnet ist, welche zusammen mit einer zweiten Elektrode, die durch mindestens einen Teil der Arbeitsfläche oder mindestens einen Teil eines Behälters oder Behälterträgers gebildet wird, einen Messkondensator bildet, welcher mit einer Messeinheit zur Messung einer Impedanz, insbesondere einer Kapazität, des Messkondensators wirkverbunden ist, wobei die Arbeitsfläche oder der Behälter oder Behälterträger mindestens eine erste und eine zweite Aussparung oder Vertiefung aufweist, welche Änderungen der Impedanz, insbesondere der Kapazität, des Messkondensators bewirken, wobei die erste und zweite Aussparung oder Vertiefung dreiecks- oder trapezförmig ist, und wobei die Arbeitsfläche oder der Behälter oder Behälterträger zwei gleiche dreiecks- oder trapezförmige Aussparungen oder Vertiefungen aufweist, welche insbesondere um 180° verdreht zueinander angeordnet sind, und die Messeinheit mit einer Auswerteeinheit verbunden ist, wobei die Steuereinheit, die Messeinheit und die Auswerteeinheit dazu ausgebildet und konfiguriert sind, um das oben vorgeschlagene erfindungsgemässe Verfahren zur (Referenz-)Positionsbestimmung eines Roboterarms auszuführen.

Das vorgeschlagene erfindungsgemässe Verfahren kann dazu verwendet werden, eine Referenzposition und/oder eine Referenzdistanz bei einer Inbetriebnahme eines automatischen Flüssigkeitshandhabungssystems und insbesondere während eines Betriebs des automatischen Flüssigkeitshandhabungssystems, insbesondere im Sinne einer Initialkalibration respektive einer laufenden Kalibration einer Referenzposition und/oder einer Referenzdistanz, zu bestimmen.

Eine weitere Verwendung des oben vorgeschlagenen erfindungsgemässen Verfahrens besteht darin eine Position einer Öffnung eines Behälters, wie beispielsweise eines Probenröhrchens oder einer Kavität (sog. "Well") in einer Mikroplatte, insbesondere in Bezug auf eine Pipettenspitze, welche in die Öffnung abgesenkt werden soll, insbesondere während eines laufenden Betriebs eines automatischen Flüssigkeitshandhabungssystems, und weiter insbesondere basierend auf einer zuvor mittels des Verfahrens nach einem der Ansprüche 1 bis 10 bestimmten Referenzposition und/oder einer Referenzdistanz an einem Behälterträger, insbesondere einer Mikroplatte mit einer Vielzahl von Kavitäten, zu bestimmen.

### KURZE BESCHREIBUNG DER ZEICHNUNGEN

Nichtlimitierende Ausführungsbeispiele der vorliegenden Erfindung werden nachstehend anhand von Figuren noch näher erläutert. Es zeigen:
- Fig. 1: eine Draufsicht auf eine Arbeitsfläche eines Flüssigkeitshandhabungssystems mit einem Pipettierroboter, wobei auf der Arbeitsfläche unterschiedliche Labware (Behälter(-Träger)) platziert sind;
- Fig. 2: a) eine Queransicht auf eine Arbeitsfläche mit einer Aussparung,
b) gemessene Kapazität des Messkondensators in Funktion der x-Koordinate der Messsonde; und

- Fig. 3: eine Draufsicht auf eine Arbeitsfläche mit zwei um 180° zueinander verdreht angeordneten dreiecksförmigen Aussparungen.

In den Figuren stehen gleiche Bezugszeichen für gleiche Elemente.

### DETAILLIERTE BESCHREIBUNG DER ERFINDUNG

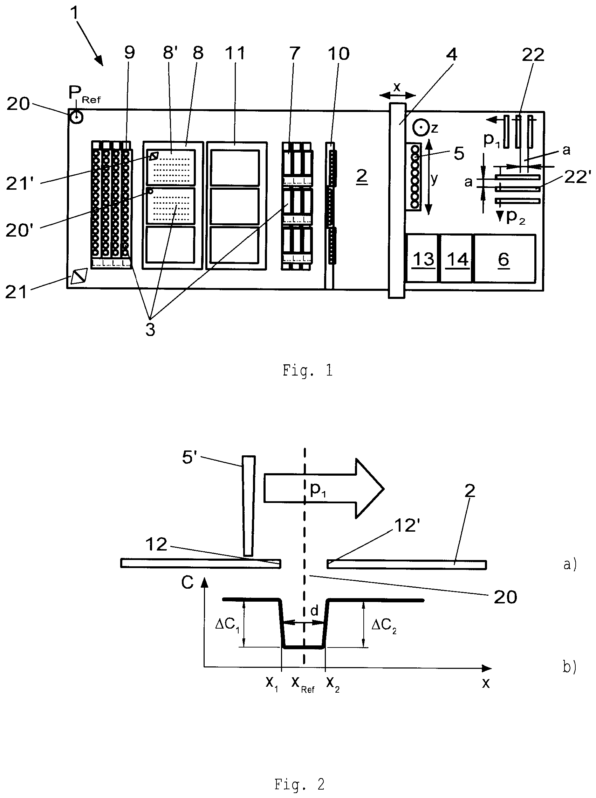

Fig. 1 zeigt eine Draufsicht auf eine Arbeitsfläche 2 eines automatischen Flüssigkeitshandhabungssystems 1 mit einem Pipettierroboter 4, wobei auf der Arbeitsfläche 2 unterschiedliche Behälter 3 platziert sind. Eine Auswahl an Behältern 3 wie Probenröhrchen 9, die beispielsweise in sogenannten "Racks" auf der Arbeitsfläche 2 des Flüssigkeitshandhabungssystems 1 platziert werden oder Mikroplatten 8 mit beispielsweise 24, 96, 384 oder 1536 Kavitäten/Wells ist hier dargestellt. Zu den Behältern 3 gehören auch sogenannte Tröge 7 und weitere, hier nicht dargestellte Behälter zum zumindest zeitweisen Aufbewahren von Flüssigkeiten. Das Flüssigkeitshandhabungssystem 1 umfasst des Weiteren einen motorisch angetriebenen Pipettierroboter 4 mit mindestens einer Pipette 5 zum Aufnehmen und Abgeben von Flüssigkeitsproben. Gezeigt ist hier ein Pipettierroboter 4, der in der Längsachse des Flüssigkeitshandhabungssystems 1 (d.h. in x-Richtung) bewegt werden kann, und der acht Pipetten 5 mit je einer Pipettenspitze aufweist, welche in einer zur x-Achse rechtwinkligen Richtung (y-Achse), quer über die Arbeitsfläche 2 des Flüssigkeitshandhabungssystems 1 bewegt und an jedem beliebigen Ort auf dieser Arbeitsfläche 2 abgesenkt werden können. Jede Pipette 5 ist an einer vertikal angeordneten "z-Stange" angebracht, die sich mittels eines Antriebs auf und ab, d.h. in "z-Richtung" bewegen lässt, sodass die daran befestigte Pipette 5 sich durch die z-Stange (vertikal) absenken bzw. anheben lässt. Ferner ist jede Pipette 5 über eine individuelle Leitung mit einer aktivierbaren Pumpe fluidisch verbunden. Dies bedeutet, dass zwischen dem fördernden Element der Pumpe und der Pipette 5 bzw. deren Pipettenspitze, mit welcher eine Flüssigkeitsprobe aufgenommen bzw. abgegeben werden soll, eine Flüssigkeit (z.B. Systemflüssigkeit), ein Gas (z.B. Inertgas) oder eine Kombination von beiden (z.B. Systemflüssigkeit mit "Airgap") vorhanden ist. Ebenfalls gezeigt sind zwei Behälterträger 11 (sog. "Carrier"), die in diesem Fall zum Tragen von drei Mikroplatten ausgebildet sind. Zudem ist eine Waschstation 10 dargestellt, bei welcher die Pipettenspitzen mit einer oder mehreren Waschflüssigkeiten durchgespült werden können. Zudem umfasst das Flüssigkeitshandhabungssystem 1 eine Steuereinheit 6, mit welcher der Pipettierroboter 4 (bzw. seine Antriebe, die hier nicht dargestellt sind) und seine Pumpen (bzw. deren hier ebenfalls nicht dargestellten Antriebe) wirkverbunden sind. Zumindest Teile eines in dieser Steuereinheit 6 aktivierten Steuerprogramms befähigen den Pipettierroboter 4, die zumindest eine Pipette 5 an bestimmten Positionen auf der Arbeitsfläche 2 zu Positionieren und dort mit der zumindest einen Pipette 5 eine spezifische Aktion auszuführen. Diese spezifischen Aktionen sind jedem Fachmann auf dem Gebiet des Liquid-Handlings bekannt und umfassen das Aufnehmen, Spülen und/oder Abwerfen einer Pipettenspitze sowie das Aufnehmen, Mischen und/oder Abgeben eines Volumens einer Flüssigkeitsprobe. Je nach der ausgewählten Aktion oder Sequenz von ausgewählten Aktionen befähigt das Steuerprogramm den Pipettierroboter 4 zu deren Ausführung.

Das Problem, welches sich nun aufgrund mechanischer Toleranzen ergibt, ist, dass die Position des Pipettierroboter(-arms) 4 bzw. der an den Pipetten 5 angeordneten Pipettenspitzen nicht genau bekannt ist. Dies kann insbesondere beim Einsatz von sogenannten "highdensity plates", d.h. von Mikroplatten 8 mit 384 oder 1536 Kavitäten/Wells, zu Problemen führen. Es ist daher notwendig bei Inbetriebnahme des Flüssigkeitshandhabungssystems 1 eine Positionskalibration vorzunehmen. Dies erfolgt erfindungsgemäss mit Hilfe von Impedanzmessungen (zur Bestimmung sowohl eines resistiven (= Realteil) wie auch eines kapazitiven (= Imaginärteil) Anteils einer komplexwertigen Impedanz), insbesondere von Kapazitätsmessungen, wobei eine Messsonde mit einer ersten Elektrode am Roboterarm angeordnet ist, welche zusammen mit einer zweiten Elektrode, die durch mindestens einen Teil der Arbeitsfläche 2 oder mindestens einen Teil eines Behälters 3 oder Behälterträgers 11 gebildet wird, einen Messkondensator (mit einer komplexwertigen Impedanz) bildet, welcher mit einer Messeinheit 13 zur Messung einer Kapazität des Messkondensators wirkverbunden ist. Idealerweise wird im Falle eines Pipettierroboters 4 eine Pipettenspitze als Messsonde eingesetzt. Im Falle eines Logistikroboters ist es vorzugsweise jeweils einer der Greiferfinger, welcher als Messsonde verwendet wird.

Fig. 2 a) zeigt eine Queransicht auf eine Arbeitsfläche 2 mit einer Aussparung 20 in Form eines runden Lochs. Die Messsonde in Form der Pipettenspitze 5', welche hier zusammen mit der Arbeitsfläche 2 den Messkondensator bildet, wird vom Pipettierroboter 4 zuerst vertikal (d.h. in z-Richtung) herabgesenkt bis sie sich knapp über der Arbeitsfläche 2 befindet (z.B. in einem Abstand kleiner als 1 mm). Um diesen Abstand zu bestimmen, wird mit der Messeinheit 13 während der Bewegung der Pipettenspitze 5' laufend die Kapazität des Messkondensators gemessen, bis diese einen bestimmten Wert erreicht, welcher charakteristisch ist für den gewünschten Abstand der Pipettenspitze 5' zur Arbeitsfläche 2. Dann wird die Pipettenspitze 5' entlang eines horizontalen (d.h. in x-/y-Richtung) Pfades p₁ über der Arbeitsfläche 2 bewegt, welcher über das Loch 20 führt. Durch fortlaufende Messung der Kapazität C des Messkondensators ist es möglich, die Kante 12 des Loches 20 zu detektieren, welche sich als sprunghafte Abnahme (ΔC₁) der Kapazität C manifestiert, wie dies in der gemessenen Kurve der Kapazität C in Funktion der x-Position in Fig. 2 b) dargestellt ist. Nachdem die Pipettenspitze 5' das Loch 20 überquert hat, wird die zweite Kante 12' des Loches 20 durch einen sprunghaften Anstieg (ΔC₂) der Kapazität C angezeigt. Anhand der Positionen x₁ und x₂, an denen die Kapazitätsänderungen ΔC₁ und ΔC₂ stattgefunden haben, kann die Auswerteeinheit 14 nun zwei Grössen bestimmen. Aus der Differenz x₂-x₁ kann der (Referenz-)Durchmesser d des Loches 20 (und auf entsprechende Weise ein Abstand a; s. Fig. 1) ermittelt werden, welcher von der Steuereinheit 6 nun als kalibrierte Referenzdistanz in x-Richtung verwendet werden kann. Weiter dient das Zentrum des Loches 20 der Steuereinheit 6 nun als kalibrierte Referenzraumkoordinate x_{Ref} (= x₁+d/2) in x-Richtung.

Zur Kalibration der Referenzdistanz in y-Richtung wird anschliessend die Pipettenspitze 5' entlang eines zweiten horizontalen (d.h. in x-/y-Richtung) Pfades p₂, welcher senkrecht zu p₁ verläuft, über der Arbeitsfläche 2 und das Loch 20 bewegt. Damit wird auch eine kalibrierte Referenzraumkoordinate in y-Richtung ermittelt, welche nun zusammen mit der ermittelten Referenzdistanz in y-Richtung von der Steuereinheit 6 eingesetzt wird.

Zur genaueren Bestimmung des Lochdurchmessers 20 kann die Pipettenspitze 5' beispielsweise nach einem ersten Überqueren des Loches 20, das zur (groben) Bestimmung der Positionen x₁ und x₂ der Kanten 12 und 12' dient, in das Loch 20 abgesenkt werden, was zu einer Erhöhung der gemessenen Kapazität C des Messkondensators führt. Des Weiteren kann die Genauigkeit der Positions- bzw. Distanzbestimmung weiter erhöht werden, indem mehrere Messungen ausgeführt werden und die Messergebnisse gemittelt werden, was zu einer Geräuschverminderung führt.

Das Loch 20 kann beispielsweise durch ein Material verschlossen sein, welches eine andere Dielektrizitätskonstante oder Leitfähigkeit aufweist als die Arbeitsfläche 2. Damit die Arbeitsfläche 2 als Elektrode wirkt, wird diese idealerweise aus Metall sein, wogegen das Loch 20 z.B. mit einem Isolator, wie beispielsweise einem nichtleitenden Kunststoff verschlossen sein könnte, um z.B. zu verhindern, dass Problemflüssigkeiten durch das Loch 20 abfliessen könnten. Das beschriebene Positionsbestimmungsverfahren, würde auch so funktionieren, da beim Übergang von Materialien mit verschiedenen Dielektrizitätskonstanten oder unterschiedlicher Leitfähigkeit entsprechende Kapazitätssprünge auftreten würden.

Anstatt Aussparungen wie Löchern 20 können auch Vertiefungen wie Mulden als Referenzpositionsmarkierungen bzw. als Referenzpositionsbestimmungskennzeichen eingesetzt werden. Alternativ können auch unterschiedlich (in x- und y-Richtung) ausgerichtete Schlitze 22, 22' verwendet werden, wie dies in Fig. 1 in der oberen rechten Ecke der Arbeitsfläche 2 dargestellt ist. Zur Erhöhung der Genauigkeit können eine Serie von mehreren Schlitzen 22, 22' hintereinander in jeder Richtung angeordnet sein. So kann z.B. eine Aneinanderreihung einer Vielzahl von äquidistanten Schlitzen 22, 22' durch die Messsonde 5' nur einmal überquert werden und die Ergebnisse gemittelt werden, um eine Referenzdistanz a zu bestimmen, anstatt einen Schlitz mehrmals hin und zurück zu überqueren um ein gemitteltes Ergebnis für die Referenzdistanz a zu erhalten.

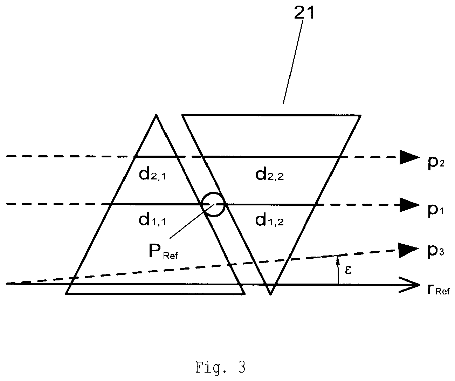

Fig. 3 zeigt eine weitere Möglichkeit zur Positionsbestimmung bzw. -kalibration. Dazu werden auf der Arbeitsfläche 2 zwei um 180° zueinander verdreht angeordnete dreiecksförmige Aussparungen 21 verwendet. Beim Überqueren dieser beiden Aussparungen 21 entlang des Pfades p₁ in der Mitte dieser Dreiecke sind die beiden Strecken d_{1,1} und d_{1,2} gleich lang, womit der Referenzpunkt P_{Ref} genau zwischen diesen beiden Strecken d_{1,1} und d_{1,2} liegen muss. Ist der Pfad jedoch von der Mitte wegversetzt, wie beispielsweise der Pfad p₂ in Fig. 3, so werden die beiden Abschnitte d_{2,1} und d_{2,2} unterschiedlich lang. Basierend auf der Form und Grösse der Aussparungen 21 sowie dem Verhältnis d_{2,1}/d_{2,2} der beiden Abschnitte d_{2,1} und d_{2,2} kann dann die Auswerteeinheit 14 den Versatz und somit die Position des Referenzpunktes P_{Ref} genau bestimmen. Zudem lässt sich der Winkelfehler ε, d.h. eine Richtungsabweichung eines Pfades (s. Pfad p₃ in Fig. 3) von einer Referenzrichtung r_{Ref} bestimmen. Diese Information ist beispielsweise (in der Produktion) für das Ausrichten der Roboterarme relevant. Diese müssen 90° zur x-Achse justiert werden. Ist dies nicht der Fall, wäre z.B. ein Bewegungspfad nicht parallel zur Längskante der Arbeitsfläche. Da die Geometrie der Dreiecke und die Bewegungsrichtung bekannt ist, lässt sich dieser Winkelfehler ε ausrechen.

Das vorgeschlagene Verfahren zur Positionsbestimmung ist insbesondere vorteilhaft bei der Verwendung von Wegwerfpipettenspitzen. Das Problem, welches hierbei auftritt, ist, dass die Wegwerfpipettenspitzen selber aufgrund von mechanischen Fertigungstoleranzen leicht unterschiedlich geformt sein können, bzw. dass die Position der Pipettenspitzenöffnung nicht genau bekannt ist, z.B. auch wenn die Spitze leicht schief auf der Pipettenröhre angebracht wurde. Um diese Unsicherheit zu beseitigen, wird jedes Mal, nachdem eine neue Wegwerfpipettenspitze auf der Pipettenröhre angebracht wurde, eine Positionskalibration gemäss dem erfindungsgemässen Verfahren durchgeführt.

Ähnliches gilt auch beim Einsatz von Mikroplatten mit einer grossen Anzahl von Kavitäten/Wells, wie z.B. 384 oder 1536 Stück. Dabei ist die Position der einzelnen Wells von der Positionierungsgenauigkeit (sowie der Fertigungsgenauigkeit) der Mikroplatten abhängig. Es wird daher vorgeschlagen nach dem Ablegen einer Mikroplatten, deren genaue Position mittels des erfindungsgemässen Verfahrens zur Positionsbestimmung zu ermitteln. Dazu werden entsprechende Referenzpositionsmarkierungen 20', 21' bzw. Referenzpositionsbestimmungskennzeichen direkt auf den Mikroplatten oder auf den Carriern, auf denen die Mikroplatten befestigt werden, angebracht, wie dies in Fig. 1 dargestellt ist.

### LISTE DER BEZUGSZEICHEN

- 1: automatisches Flüssigkeitshandhabungssystem
- 2: Arbeitsfläche
- 3: Behälter
- 4: Pipettierroboter(-arm)
- 5: Pipette
- 5': Messsonde, Pipettenspitze
- 6: Steuereinheit
- 7: Trog
- 8: Mikroplatte
- 8': Kavität/Well
- 9: Probenröhrchen
- 10: Waschstation
- 11: Behälterträger/Carrier
- 12, 12': Kante
- 13: Messeinheit
- 14: Auswerteeinheit
- 20, 20': Loch
- 21, 21': dreiecksförmige Aussparung
- 22, 22': Schlitz
- a: (Referenz-)Abstand/Distanz
- C: Kapazität des Messkondensators
- ΔC₁, ΔC₂: Änderung der Kapazität des Messkondensators
- d, d_{i,j}: (Referenz-) Durchmesser
- ε: Winkelfehler/Richtungsabweichung eines Pfades von einer Referenzrichtung
- p₁, p₂, p₃: Pfad
- P_{Ref}: Referenzposition
- r_{Ref}: Referenzrichtung
- x₁, x₂: x-Position
- x_{Ref}: x-Referenzkoordinate
- x: 1. horizontale Richtung
- y: 2. horizontale Richtung
- z: vertikale Richtung

## Patentansprüche

1. Verfahren zur Positionsbestimmung eines Roboterarms (4) in einem automatischen Flüssigkeitshandhabungssystem (1) umfassend eine im Wesentlichen horizontal ausgerichtete Arbeitsfläche (2) zum Platzieren von Behältern (3) oder Behälterträgern (11) und mindestens ein Roboterarm (4) mit einem Antrieb, wie beispielsweise ein Pipettierroboter (4) mit mindestens einer Pipette (5) zum Aufnehmen und/oder Abgeben von Flüssigkeitsproben oder ein Logistikroboter mit mindestens einem Greiferfinger zum Bewegen der Behälter (3) oder Behälterträger (11), sowie eine Steuereinheit (6), welche mit dem Roboterarm (4) wirkverbunden ist, wobei eine Messsonde (5') mit einer ersten Elektrode am Roboterarm (4) angeordnet ist, welche zusammen mit einer zweiten Elektrode, die durch mindestens einen Teil der Arbeitsfläche (2) oder mindestens einen Teil eines Behälters (3) oder Behälterträgers (11) gebildet wird, einen Messkondensator bildet, welcher mit einer Messeinheit (13) zur Messung einer Impedanz, insbesondere einer Kapazität (C), des Messkondensators wirkverbunden ist, wobei die Arbeitsfläche (2) oder der Behälter (3) oder Behälterträger (11) mindestens eine erste und eine zweite Aussparung (21, 21') oder Vertiefung aufweist, welche Änderungen (ΔC₁, ΔC₂) der Impedanz, insbesondere der Kapazität (C), des Messkondensators bewirken, **dadurch gekennzeichnet, dass** die erste und zweite Aussparung (21, 21') oder Vertiefung dreiecks- oder trapezförmig ist, und wobei die Arbeitsfläche (2) oder der Behälter (3) oder Behälterträger (11) zwei gleiche dreiecksoder trapezförmige Aussparungen (21, 21') oder Vertiefungen aufweist, welche insbesondere um 180° verdreht zueinander angeordnet sind, wobei das Verfahren folgende Schritte aufweist:
a) Bewegen der Messsonde (5') entlang eines ersten Pfades (p₁), insbesondere eines im Wesentlichen horizontalen Pfades über der Arbeitsfläche (2) oder des Behälters (3) oder Behälterträgers (11), wobei der erste Pfad (p₁) die erste und die zweite Aussparung (21, 21') oder Vertiefung überquert;
b1) Detektieren einer ersten Änderung (ΔC₁) der Impedanz, insbesondere der Kapazität (C), des Messkondensators an einer ersten Stelle (x₁) der ersten Aussparung (21, 21') oder Vertiefung entlang des ersten Pfades (p₁);
b2) Detektieren einer zweiten Änderung (ΔC₂) der Impedanz, insbesondere der Kapazität (C), des Messkondensators an einer zweiten Stelle (x₂) der ersten Aussparung (21, 21') oder Vertiefung entlang des ersten Pfades (p₁);
b3) Detektieren einer dritten Änderung der Impedanz, insbesondere der Kapazität (C), des Messkondensators an einer ersten Stelle (x₁) der zweiten Aussparung (21', 21) oder Vertiefung entlang des ersten Pfades (p₁);
b4) Detektieren einer vierten Änderung der Impedanz, insbesondere der Kapazität (C), des Messkondensators an einer zweiten Stelle (x₂) der zweiten Aussparung (21', 21) oder Vertiefung entlang des ersten Pfades (p₁);
c) Festlegen von mindestens einer ersten Referenzraumkoordinate (x_{Ref}), z.B. einer x- oder y-Koordinate, für die Steuereinheit (6) basierend auf der ersten und der zweiten Stelle (x₁, x₂) der ersten Aussparung (21, 21') oder Vertiefung sowie der ersten und der zweiten Stelle (x₁, x₂) der zweiten Aussparung (21', 21) oder Vertiefung entlang des ersten Pfades (p₁).

2. Verfahren nach Anspruch 1, weiter umfassend vor dem Schritt a) den Schritt:
- vertikales Absenken der Messsonde (5') bis ein vorgegebener Wert der Kapazität (C) des Messkondensators erreicht wird.

3. Verfahren nach Anspruch 1 oder 2, weiter umfassend als Teil von Schritt c):
- Bestimmen einer ersten und einer zweiten Distanz (d_{1,1}, d_{1,2}) basierend auf der ersten und der zweiten Stelle (x1, x2) der ersten Aussparung (21, 21') und der ersten und der zweiten Stelle (x1, x2) der zweiten Aussparung (21', 21) entlang des ersten Pfades (p1).

4. Verfahren nach einem der Ansprüche 1 bis 3, wobei die Arbeitsfläche (2) und/oder der Behälter (3) oder Behälterträger (11) mindestens einen Materialübergang aufweist, welcher beim Bewegen der Messsonde (5') die erste, zweite oder weitere Änderung (ΔC₁, ΔC₂) der Impedanz, insbesondere der Kapazität (C), des Messkondensators bewirkt, und an welchem insbesondere eine Änderung einer Leitfähigkeit oder Dielektrizitätskonstante entlang des ersten bzw. zweiten Pfades (p₁, p₂) stattfindet.

5. Verfahren nach einem der Ansprüche 1 bis 4, weiter umfassend die Schritte:
- Absenken der Messsonde (5') in vertikaler Richtung (z) an einer Kante (12), insbesondere in die erste oder zweite Aussparung (21, 21') oder Vertiefung;
- Detektieren einer zusätzlichen Änderung der Impedanz, insbesondere der Kapazität (C), des Messkondensators an einer Stelle in vertikaler Richtung (z);
- Festlegen einer dritten, vertikalen Referenzraumkoordinate, z.B. der z-Koordinate, für die Steuereinheit (6) basierend auf der Stelle in vertikaler Richtung (z).

6. Verfahren nach einem der Ansprüche 1 bis 5, wobei beim Bewegen der Messsonde (5') entlang des ersten bzw. zweiten Pfades (p₁, p₂) eine absolute Kapazität des Messkondensators ermittelt wird, wobei die absolute Kapazität des Messkondensators insbesondere zeitlich periodisch und/oder in regelmässigen örtlichen Abständen ermittelt wird.

7. Verfahren nach einem der Ansprüche 1 bis 6, wobei das Detektieren der ersten, zweiten, weiteren oder zusätzlichen Änderung (ΔC₁, ΔC₂) der Impedanz, insbesondere der Kapazität (C), des Messkondensators, insbesondere der absoluten Kapazität des Messkondensators, auf einer Steilheit eines zeitlichen Verlaufs, insbesondere auf einer Zunahme der Steilheit, der gemessenen Kapazität des Messkondensators basiert.

8. Verfahren nach einem der Ansprüche 1 bis 7, wobei die Schritte a) bis c) mehrmals durchgeführt werden, insbesondere um eine erhöhte Genauigkeit der ersten und/oder zweiten Referenzraumkoordinate, z.B. der xund/oder y-Koordinate zu erreichen.

9. Verfahren nach einem der Ansprüche 1 bis 8, wobei das Detektieren der ersten, zweiten, weiteren oder zusätzlichen Änderung der Impedanz, insbesondere der Kapazität (C), des Messkondensators eine Mittelung und/oder eine Geräuschfilterung umfasst.

10. Verfahren nach einem der Ansprüche 1 bis 9, wobei die Messsonde durch eine Pipettenspitze (5'), insbesondere durch eine Wegwerfpipettenspitze oder ein Stahlkanülenspitze, oder einen Greiferfinger gebildet wird.

11. Automatisches Flüssigkeitshandhabungssystem (1) umfassend eine im Wesentlichen horizontal ausgerichtete Arbeitsfläche (2) zum Platzieren von Behältern (3) oder Behälterträgern (11) und mindestens ein Roboterarm (4) mit einem Antrieb, wie beispielsweise ein Pipettierroboter (4) mit mindestens einer Pipette (5) zum Aufnehmen und/oder Abgeben von Flüssigkeitsproben oder ein Logistikroboter mit mindestens einem Greiferfinger zum Bewegen der Behälter (3) oder Behälterträger (11), sowie eine Steuereinheit (6), welche mit dem Roboterarm (4) wirkverbunden ist, wobei eine Messsonde (5') mit einer ersten Elektrode am Roboterarm (4) angeordnet ist, welche zusammen mit einer zweiten Elektrode, die durch mindestens einen Teil der Arbeitsfläche (2) oder mindestens einen Teil eines Behälters (3) oder Behälterträgers (11) gebildet wird, einen Messkondensator bildet, welcher mit einer Messeinheit (13) zur Messung einer Impedanz, insbesondere einer Kapazität (C), des Messkondensators wirkverbunden ist, wobei die Arbeitsfläche (2) oder der Behälter (3) oder Behälterträger (11) mindestens eine erste und eine zweite Aussparung (21, 21') oder Vertiefung aufweist, welche Änderungen (ΔC₁, ΔC₂) der Impedanz, insbesondere der Kapazität (C), des Messkondensators bewirken, **dadurch gekennzeichnet, dass** die erste und zweite Aussparung (21, 21') oder Vertiefung dreiecks- oder trapezförmig ist, und wobei die Arbeitsfläche (2) oder der Behälter (3) oder Behälterträger (11) zwei gleiche dreiecksoder trapezförmige Aussparungen (21, 21') oder Vertiefungen aufweist, welche insbesondere um 180° verdreht zueinander angeordnet sind, und die Messeinheit (13) mit einer Auswerteeinheit (14) verbunden ist, wobei die Steuereinheit (6), die Messeinheit (13) und die Auswerteeinheit (14) dazu ausgebildet und konfiguriert sind, um das Verfahren nach einem der Ansprüche 1 bis 10 auszuführen.

## Claims

1. Method for position determination of a robot arm (4) in an automatic liquid handling system (1) comprising a substantially horizontally aligned worksurface (2) for the placement of containers (3) or container carriers (11) and at least one robot arm (4) having a drive, for example, a pipetting robot (4) having at least one pipette (5) for aspirating and/or dispensing liquid samples or a logistics robot having at least one gripper finger for moving the containers (3) or container carriers (11), and a control unit (6) which is operationally connected to the robot arm (4), wherein a measuring probe (5') having a first electrode is arranged on the robot arm (4), which, together with a second electrode, which is formed by at least a part of the worksurface (2) or at least a part of the container (3) or container carrier (11) forms a measuring capacitor, which is operationally connected to a measuring unit (13) for measuring an impedance, in particular a capacitance (C), of the measuring capacitor, wherein the worksurface (2) or the container (3) or container carrier (11) has at least a first and a second recess (21, 21') or depression, which cause changes (ΔC₁, ΔC₂) of the impedance, in particular the capacitance (C), of the measuring capacitor, **characterized in that** the first and second recess (21, 21') or depression is triangular or trapezoidal, and wherein the worksurface (2) or the container (3) or container carrier (11) has two identical triangular or trapezoidal recesses (21, 21') or depressions, which are arranged in particular pivoted by 180° in relation to one another, wherein the method has the following steps:
a) moving the measuring probe (5') along a first path (p₁), in particular a substantially horizontal path over the worksurface (2) or the container (3) or container carrier (11), wherein the first path (p₁) traverses the first and second recesses (21, 21') or depressions;
b1) detecting a first change (ΔC₁) of the impedance, in particular of the capacitance (C), of the measuring capacitor at a first point (x₁) of the first recess (21, 21') or depression along the first path (p₁);
b2) detecting a second change (ΔC₂) of the impedance, in particular of the capacitance (C), of the measuring capacitor at a second point (x₂) of the first recess (21, 21') or depression along the first path (p₁);
b3) detecting a third change of the impedance, in particular of the capacitance (C), of the measuring capacitor at a first point (x₁) of the second recess (21', 21) or depression along the first path (p₁);
b4) detecting a fourth change of the impedance, in particular of the capacitance (C), of the measuring capacitor at a second point (x₂) of the second recess (21', 21) or depression along the first path (p₁);
c) establishing at least one first reference space coordinate (x_{Ref}), for example, an x or y coordinate, for the control unit (6) based on the first and second point (x₁, x₂) of the first recess (21, 21') or depression and the first and second point (x₁, x₂) of the second recess (21', 21) or depression along the first path (p₁).

2. Method according to claim 1, furthermore comprising, before the step a), the following step:
- vertically lowering the measuring probe (5') until a predefined value of the capacitance (C) of the measuring capacitor is reached.

3. Method according to claim 1 or 2, furthermore comprising as part of step c):
- determining a first and second distance (d_{1,1}, d_{1,2}) based on the first and second point (x₁, x₂) of the first recess (21, 21') and the first and second point (x₁, x₂) of the second recess (21', 21) along the first path (p₁).

4. Method according to any one of claims 1 to 3, wherein the worksurface (2) and/or the container (3) or container carrier (11) has at least one material transition, which, during the movement of the measuring probe (5'), causes the first, second, or further change (ΔC₁, ΔC₂) of the impedance, in particular the capacitance (C), of the measuring capacitor, and at which in particular a change of a conductivity or dielectric constant takes place along the first or second path (p₁, p₂).

5. Method according to any one of claims 1 to 4, furthermore comprising the following steps:
- lowering the measuring probe (5') in vertical direction (z) at an edge (12), in particular into the first or second recess (21, 21') or depression;
- detecting an additional change of the impedance, in particular the capacitance (C), of the measuring capacitor at a point in vertical direction (z);
- establishing a third, vertical reference space coordinate, for example, the z coordinate, for the control unit (6) based on the point in vertical direction (z).

6. Method according to any one of claims 1 to 5, wherein, during the movement of the measuring probe (5') along the first or second path (p₁, p₂), an absolute capacitance of the measuring capacitor is determined, wherein the absolute capacitance of the measuring capacitor is in particular determined periodically in time and/or at regular position intervals.

7. Method according to any one of claims 1 to 6, wherein the detection of the first, second, further, or additional change (ΔC₁, ΔC₂) of the impedance, in particular the capacitance (C), of the measuring capacitor, in particular the absolute capacitance of the measuring capacitor, is based on a slope of a time curve, in particular on an increase of the slope, of the measured capacitance of the measuring capacitor.

8. Method according to any one of claims 1 to 7, wherein the steps a) to c) are carried out multiple times, in particular to achieve enhanced accuracy of the first and/or second reference space coordinate, for example, the x and/or y coordinate.

9. Method according to any one of claims 1 to 8, wherein the detection of the first, second, further, or additional change of the impedance, in particular the capacitance (C), of the measuring capacitor comprises averaging and/or noise filtering.

10. Method according to any one of claims 1 to 9, wherein the measuring probe is formed by a pipette tip (5'), in particular by a disposable pipette tip or a steel cannula tip, or a gripper finger.

11. Automatic liquid handling system (1) comprising a substantially horizontally aligned worksurface (2) for the placement of containers (3) or container carriers (11) and at least one robot arm (4) having a drive, for example, a pipetting robot (4) having at least one pipette (5) for aspirating and/or dispensing liquid samples or a logistics robot having at least one gripper finger for moving the containers (3) or container carriers (11), and a control unit (6) which is operationally connected to the robot arm (4), wherein a measuring probe (5') having a first electrode is arranged on the robot arm (4), which, together with a second electrode, which is formed by at least a part of the worksurface (2) or at least a part of the container (3) or container carrier (11) forms a measuring capacitor, which is operationally connected to a measuring unit (13) for measuring an impedance, in particular a capacitance (C), of the measuring capacitor, wherein the worksurface (2) or the container (3) or container carrier (11) has at least a first and a second recess (21, 21') or depression, which cause changes (ΔC₁, ΔC₂) of the impedance, in particular the capacitance (C), of the measuring capacitor, **characterized in that** the first and second recess (21, 21') or depression is triangular or trapezoidal, and wherein the worksurface (2) or the container (3) or container carrier (11) has two identical triangular or trapezoidal recesses (21, 21') or depressions, which are arranged in particular pivoted by 180° in relation to one another, and the measuring unit (13) is connected to an analysis unit (14), wherein the control unit (6), the measuring unit (13), and the analysis unit (14) are adapted and configured to execute the method according to one of claims 1 to 10.

## Revendications

1. Procédé pour déterminer la position d'un bras robotisé (4) dans un système automatique de manipulation de liquide (1) comprenant une surface de travail (2) orientée de façon sensiblement horizontale pour positionner des récipients (3) ou des porte-récipients (11), au moins un bras robotisé (4) avec un entraînement, comme par exemple un robot de pipetage (4) avec au moins une pipette (5) pour aspirer et/ou distribuer des échantillons liquides, ou un robot logistique avec au moins une mâchoire pour déplacer les récipients (3) ou les porte-récipients (11), ainsi qu'une unité de commande (6) en liaison active avec le bras robotisé (4), dans lequel une sonde de mesure (5') avec une première électrode est agencée sur le bras robotisé (4), laquelle sonde formant avec une deuxième électrode formée par au moins une partie de la surface de travail (2) ou par au moins une partie d'un récipient (3) ou d'un porte-récipient (11), un condensateur de mesure, lequel est en liaison active avec une unité de mesure (13) pour mesurer une impédance, en particulier une capacité (C), du condensateur de mesure, dans lequel la surface de travail (2) ou le récipient (3) ou le porte-récipient (11) présente au moins un premier et un deuxième renfoncement (21, 21') ou creux, lesquels renfoncements ou creux entraînant des variations (ΔC₁, ΔC₂) de l'impédance, en particulier de la capacité (C), du condensateur de mesure, **caractérisé en ce que** le premier et le deuxième renfoncement (21, 21') ou creux sont de forme triangulaire ou trapézoïdale, et dans lequel la surface de travail (2) ou le récipient (3) ou le porte-récipient (11) présente deux renfoncements (21, 21') ou creux triangulaires ou trapézoïdaux, agencés en particulier tournés de 180° l'un par rapport à l'autre, le procédé comprenant les étapes suivantes consistant à :
a) déplacer la sonde de mesure (5') le long d'une première trajectoire (p₁), en particulier une trajectoire sensiblement horizontale, au-dessus de la surface de travail (2) ou du récipient (3) ou du porte-récipient (11), la première trajectoire (p₁) franchissant le premier et le deuxième renfoncement (21, 21') ou creux ;
b1) détecter une première variation (ΔC₁) de l'impédance, en particulier de la capacité (C), du condensateur de mesure, à un premier point (X₁) du premier renfoncement (21, 21') ou creux le long de la première trajectoire (p₁) ;
b2) détecter une deuxième variation (ΔC₂) de l'impédance, en particulier de la capacité (C), du condensateur de mesure à un deuxième point (X₂) du premier renfoncement (21, 21') ou creux le long de la première trajectoire (p₁);
b3) détecter une troisième variation de l'impédance, en particulier de la capacité (C), du condensateur de mesure à un premier point (X₁) du deuxième renfoncement (21', 21) ou creux le long de la première trajectoire (p₁);
b4) détecter une quatrième variation de l'impédance, en particulier de la capacité (C), du condensateur de mesure à un deuxième point (X₂) du deuxième renfoncement (21', 21) ou creux le long de la première trajectoire (p₁);
c) définir au moins une première coordonnée spatiale de référence (X_{Ref}), par exemple une coordonnée x ou y, pour l'unité de commande (6) sur la base du premier et du deuxième point (X₁, X₂) du premier renfoncement (21, 21') ou creux ainsi que sur la base du premier et du deuxième point (X₁, X₂) du deuxième renfoncement (21', 21) ou creux le long de la première trajectoire (p₁).

2. Procédé selon la revendication 1, comprenant en outre avant l'étape a) l'étape consistant à :
- abaisser verticalement la sonde de mesure (5') jusqu'à atteindre une valeur prédéterminée de la capacité (C) du condensateur de mesure.

3. Procédé selon la revendication 1 ou 2, consistant en outre dans le cadre de l'étape c) à :
- définir une première et une deuxième distance (d_{1,1}, d_{1,2}) sur la base du premier et du deuxième point (X₁, X₂) du premier renfoncement (21, 21') et du premier et du deuxième point (X₁, X₂) du deuxième renfoncement (21', 21) le long de la première trajectoire (p₁).

4. Procédé selon l'une des revendications 1 à 3, dans lequel la surface de travail (2) et/ou le récipient (3) ou le porte-récipient (11) présente au moins une transition de matériau qui provoque, lorsque l'on déplace la sonde de mesure (5'), la première, deuxième ou autre variation (ΔC₁, ΔC₂) de l'impédance, en particulier de la capacité (C), du condensateur de mesure, et au niveau de laquelle se produit en particulier une variation de la conductivité ou de la constante diélectrique le long de la première ou de la deuxième trajectoire (p₁, p₂).

5. Procédé selon l'une des revendications 1 à 4, comprenant en outre les étapes consistant à :
- abaisser la sonde de mesure (5') dans le sens vertical (z) sur un bord (12), en particulier dans le premier ou le deuxième renfoncement (21, 21') ou creux ;
- détecter une variation supplémentaire de l'impédance, en particulier de la capacité (C), du condensateur de mesure à un point dans le sens vertical (z) ;
- définir une troisième coordonnée spatiale de référence verticale, par ex. la coordonnée z, pour l'unité de commande (6) sur la base du point dans le sens vertical (z).

6. Procédé selon l'une des revendications 1 à 5, dans lequel, lorsque l'on déplace la sonde de mesure (5') le long de la première ou de la deuxième trajectoire (p₁, p₂), il est défini une capacité absolue du condensateur de mesure, la capacité absolue du condensateur de mesure étant en particulier définie de façon périodique dans le temps et/ou à des intervalles spatiaux réguliers.

7. Procédé selon l'une des revendications 1 à 6, dans lequel la détection de la première, de la deuxième ou d'une autre variation (ΔC₁, ΔC₂) de l'impédance, en particulier de la capacité (C), du condensateur de mesure, en particulier de la capacité absolue du condensateur de mesure, est basée sur une déclivité d'un tracé temporel, en particulier sur une augmentation de la déclivité, de la capacité mesurée du condensateur de mesure.

8. Procédé selon l'une des revendications 1 à 7, dans lequel les étapes a) à c) sont réalisées plusieurs fois, en particulier pour atteindre une plus grande précision de la première et/ou de la deuxième coordonnée spatiale de référence, par exemple de la coordonnée x et/ou y.

9. Procédé selon l'une des revendications 1 à 8, dans lequel la détection de la première, de la deuxième ou d'une autre variation de l'impédance, en particulier de la capacité (C), du condensateur de mesure comprend le calcul d'une moyenne et/ou un filtrage du bruit.

10. Procédé selon l'une des revendications 1 à 9, dans lequel la sonde de mesure est formée par une pointe de pipette (5'), en particulier par une pointe de pipette jetable ou une pointe de canule en acier, ou par une mâchoire.

11. Système automatique de manipulation de liquide (1) comprenant une surface de travail (2) orientée de façon sensiblement horizontale pour positionner des récipients (3) ou des porte-récipients (11), au moins un bras robotisé (4) avec un entraînement, comme par exemple un robot de pipetage (4) avec au moins une pipette (5) pour aspirer et/ou distribuer des échantillons liquides, ou un robot logistique avec au moins une mâchoire pour déplacer les récipients (3) ou les porte-récipients (11), ainsi qu'une unité de commande (6) en liaison active avec le bras robotisé (4), dans lequel une sonde de mesure (5') avec une première électrode est agencée sur le bras robotisé (4), laquelle sonde formant avec une deuxième électrode formée par au moins une partie de la surface de travail (2) ou par au moins une partie d'un récipient (3) ou d'un porte-récipient (11), un condensateur de mesure, lequel est en liaison active avec une unité de mesure (13) pour mesurer une impédance, en particulier une capacité (C), du condensateur de mesure, dans lequel la surface de travail (2) ou le récipient (3) ou le porte-récipient (11) présente au moins un premier et un deuxième renfoncement (21, 21') ou creux, lesquels renfoncements ou creux entraînant des variations (ΔC₁, ΔC₂) de l'impédance, en particulier de la capacité (C), du condensateur de mesure, **caractérisé en ce que** le premier et le deuxième renfoncement (21, 21') ou creux sont de forme triangulaire ou trapézoïdale, et dans lequel la surface de travail (2) ou le récipient (3) ou le porte-récipient (11) présente deux renfoncements (21, 21') ou creux triangulaires ou trapézoïdaux, agencés en particulier tournés de 180° l'un par rapport à l'autre, et **en ce que** l'unité de mesure (13) est reliée à une unité d'analyse (14), l'unité de commande (6), l'unité de mesure (13) et l'unité d'analyse (14) étant conçues et configurées pour réaliser le procédé selon l'une des revendications 1 à 10.
